# FASCICULE DE BREVET EUROPEEN

(11) **EP 4 168 309 B1**
(45) Date de publication et mention de la délivrance du brevet: **01.10.2025**
(21) Numéro de dépôt: 21734133.8
(22) Date de dépôt: 21.06.2021
(51) Int. Cl.: B64C 25/22, B64C 25/26

(54) **DISPOSITIF DE VERROUILLAGE D'ATTERRISSEUR**
FAHRWERKSVERRIEGLUNGSMECHANISMUS
LANDING GEAR LOCKING MECHANISM

(30) Priorité: 23.06.2020 FR 2006560
(43) Date de publication de la demande: 26.04.2023
(73) Titulaire: Safran Landing Systems, 78140 Vélizy-Villacoublay (FR)
(72) Inventeur: DUBOIS, Sébastien, 77550 MOISSY-CRAMAYEL (FR); DOUX, Aurélien, 77550 MOISSY-CRAMAYEL (FR); HENRION, Philippe, 77550 MOISSY-CRAMAYEL (FR); PAVOINE, Vincent, 77550 MOISSY-CRAMAYEL (FR)
(74) Mandataire: Cabinet Boettcher
(86) Numéro de dépôt international: PCT/EP2021/066882
(87) Numéro de publication internationale: WO 2021/259878

(56) Documents cités:
- EP-A1- 3 495 263
- EP-A1- 3 539 867
- FR-A1- 2 801 865
- FR-A1- 2 928 623

## Description

### DOMAINE DE L'INVENTION

L'invention concerne le domaine des atterrisseurs d'aéronef déployables et plus particulièrement les dispositifs de verrouillage en position de l'atterrisseur.

### ARRIERE PLAN DE L'INVENTION

Classiquement, un atterrisseur d'aéronef comprend une jambe d'atterrisseur dont une première extrémité est articulée sur l'aéronef et dont une deuxième extrémité porte un train de roues. Un vérin de déploiement s'étend entre la structure de l'aéronef et la jambe d'atterrisseur et permet de déplacer sélectivement l'atterrisseur entre une position déployée et une position rétractée. Généralement, un tel atterrisseur comprend un dispositif de verrouillage de la jambe en sa position déployée et/ou rétractée comme illustré notamment par le document FR-A-2801865. Ce dispositif de verrouillage comprend un organe de stabilisation qui maintient le dispositif de verrouillage dans son état, préalablement à la commande du vérin de déploiement.

Un tel dispositif ne permet pas d'agir sur le dispositif de verrouillage et de s'assurer de son état. Dans le cas d'atterrisseur massif, l'organe de stabilisation dimensionné pour délivrer des efforts suffisants est encombrant et lourd.

### OBJET DE L'INVENTION

L'invention a pour objet d'améliorer la compacité et la fiabilité d'un dispositif de verrouillage d'atterrisseur.

### RESUME DE L'INVENTION

L'invention concerne un atterrisseur destiné à être monté à rotation sur un aéronef et équipé d'un vérin hydraulique de déploiement comprenant une première chambre reliée à une première alimentation hydraulique et une deuxième chambre reliée à une deuxième alimentation hydraulique. L'atterrisseur est équipé d'un dispositif de verrouillage comprenant un actionneur hydraulique relié à un distributeur tournant. Le distributeur tournant comporte des moyens de la liaison fonctionnelle du distributeur tournant à l'atterrisseur, un premier port d'alimentation fluidiquement relié à la première alimentation hydraulique et un premier port de sortie fluidiquement relié à l'actionneur hydraulique.

Ainsi, l'état du distributeur alimentant le dispositif de verrouillage est mécaniquement indexé sur la position de l'atterrisseur et ne requiert pas de pilotage séparé ou de liaison fluidique commandée dédiée. Le dispositif de verrouillage ainsi simplifié possède une fiabilité augmentée. Avantageusement, l'actionneur est un vérin comportant une troisième chambre reliée au premier port de sortie. En outre, l'actionneur peut comprendre une quatrième chambre, le distributeur tournant comprenant un deuxième port d'alimentation fluidiquement relié à la deuxième alimentation hydraulique et un deuxième port de sortie fluidiquement relié à la quatrième chambre.

Selon un mode de réalisation préféré le distributeur tournant est agencé de manière à ce que :
- dans un premier état, le premier port d'alimentation est relié au deuxième port de sortie et le deuxième port d'alimentation est relié au premier port de sortie ;
- dans un deuxième état, le premier port d'alimentation est relié par une première restriction au premier port de sortie et au deuxième port de sortie, le deuxième port d'alimentation est relié par une deuxième restriction au premier port de sortie et au deuxième port de sortie ;
- dans un troisième état, le premier port d'alimentation est relié au premier port de sortie et le deuxième port d'alimentation est relié au deuxième port de sortie.

Préférentiellement, les moyens de la liaison fonctionnelle du distributeur tournant à l'atterrisseur comprennent un accouplement à une jambe de l'atterrisseur.

Avantageusement encore, le distributeur comprend un troisième port de sortie en lien fluidique constant avec le premier port d'alimentation et/ou un quatrième port de sortie en lien fluidique constant avec le deuxième port d'alimentation.

La fiabilité du dispositif est encore améliorée lorsqu'une première conduite de liaison entre le troisième port et l'actionneur hydraulique et une deuxième conduite de liaison entre le quatrième port et l'actionneur hydraulique sont rigides.

Préférentiellement, un bâti de l'actionneur est solidaire d'une jambe de l'atterrisseur qui porte une roue.

Avantageusement, le dispositif de verrouillage comprend une première biellette de verrouillage articulée sur une deuxième biellette de verrouillage, l'actionneur étant relié à la première ou la deuxième biellette.

L'invention concerne également un aéronef comprenant un tel atterrisseur.

D'autres caractéristiques et avantages de l'invention ressortiront à la lecture de la description qui suit de modes de réalisation particuliers non limitatifs de l'invention.

### BREVE DESCRIPTION DES DESSINS

- la figure 1 est une vue schématique d'un atterrisseur selon l'invention dans une position déployée ;
- la figure 2 est une vue de détail d'un vérin de déploiement de l'actionneur de la figure 1 ;
- la figure 3 est une vue schématique de détail du dispositif de verrouillage de l'atterrisseur la figure 1 ;
- la figure 4 est une vue schématique de l'atterrisseur de la figure 1 ;
- la figure 5 est une vue schématique de détail d'un distributeur selon un premier mode de réalisation de l'invention dans un premier état selon un premier plan de coupe ;
- la figure 6 est une vue identique à celle de la figure 5 établie selon un deuxième plan de coupe ;
- la figure 7 est une vue schématique de détail du distributeur de la figure 5 dans un deuxième état selon le premier plan de coupe ;
- la figure 8 est une vue identique à celle de la figure 7 établie selon le deuxième plan de coupe ;
- la figure 9 est une vue schématique de détail du distributeur de la figure 5 dans un troisième état ;
- la figure 10 est une vue schématique de détail du distributeur de la figure 5 dans un troisième état selon le premier plan de coupe ;
- la figure 11 est une vue identique à celle de la figure 10 établie selon le deuxième plan de coupe ;
- la figure 12 est une vue schématique de l'atterrisseur de la figure 1 dans une première position ;
- la figure 13 est une vue schématique de l'atterrisseur de la figure 1 dans une deuxième position ;
- la figure 14 est une vue schématique de l'atterrisseur de la figure 1 dans une troisième position ;
- la figure 15 est une vue schématique de l'atterrisseur de la figure 1 dans une quatrième position ;
- la figure 16 est une vue schématique de l'atterrisseur de la figure 1 dans une cinquième position ;
- la figure 17 est une vue schématique de détail d'un distributeur selon un deuxième mode de réalisation de l'invention.

### DESCRIPTION DETAILLEE DE L'INVENTION

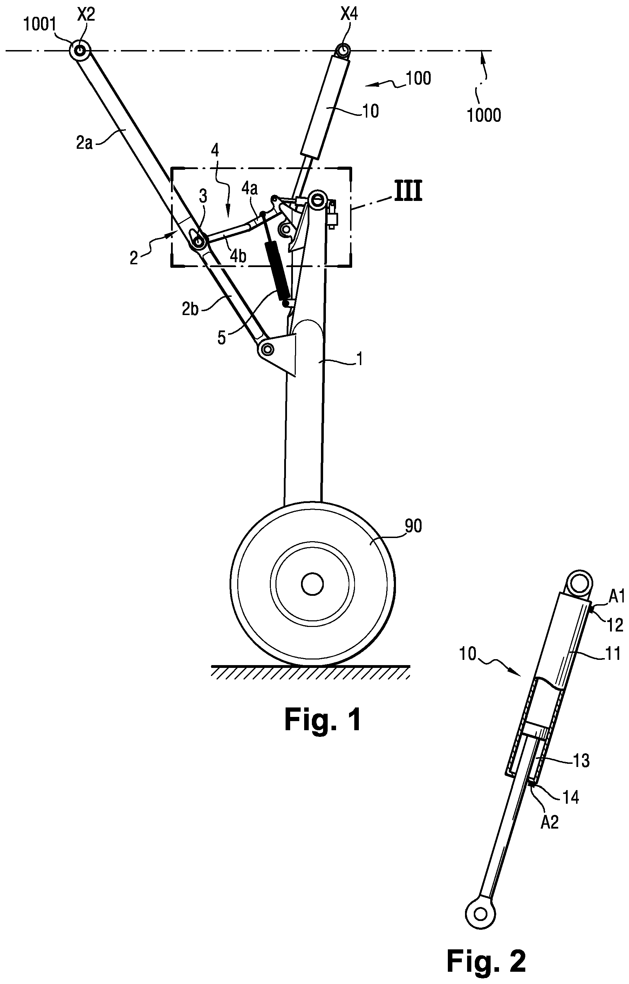

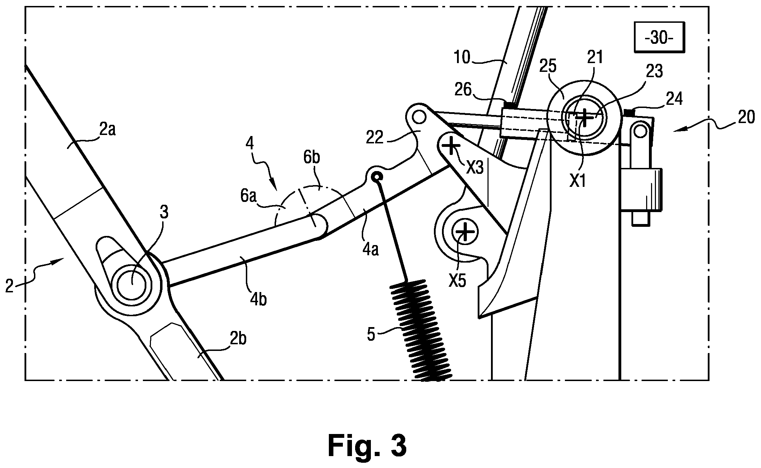

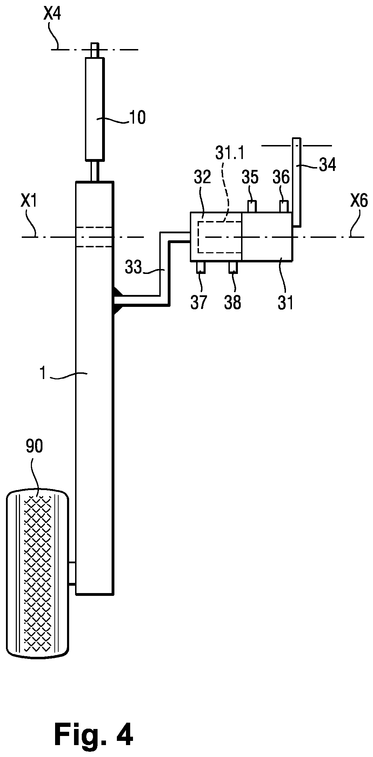

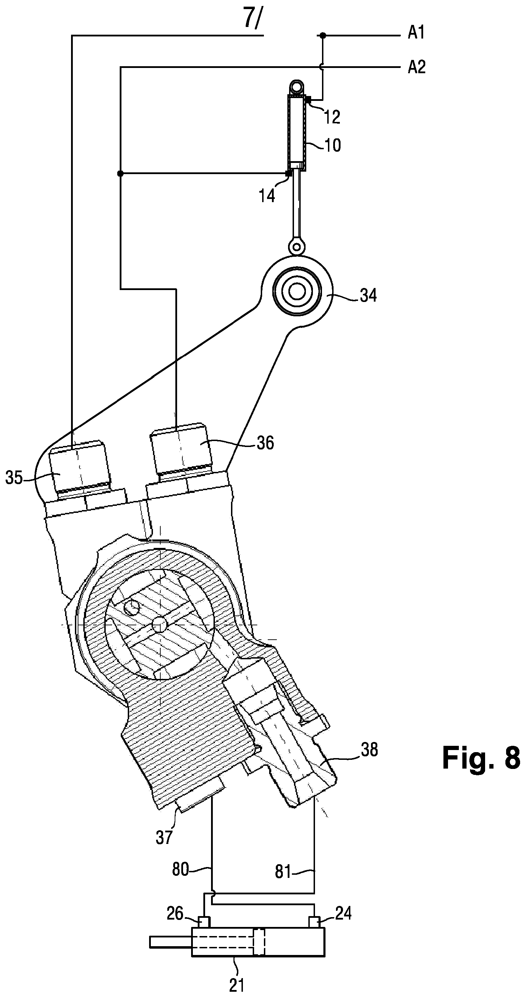

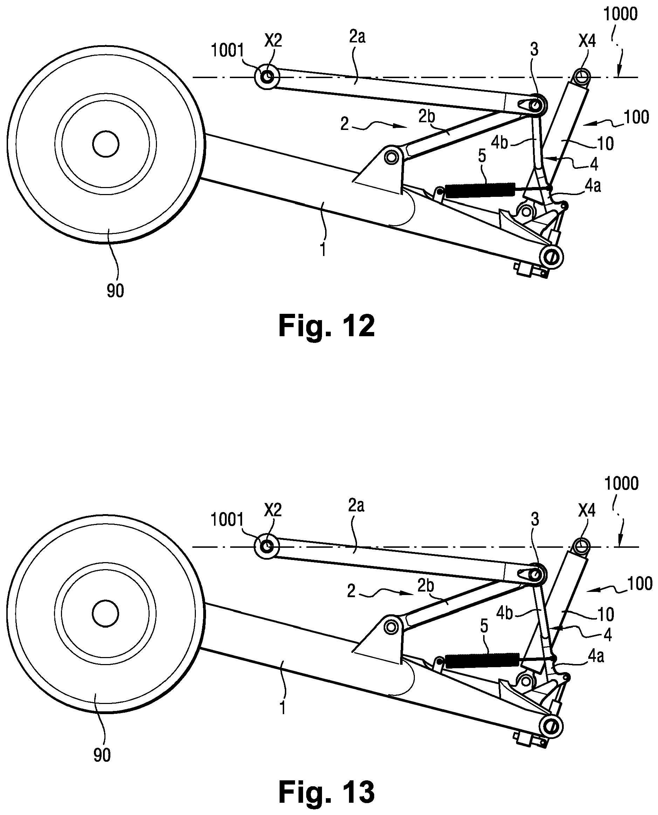

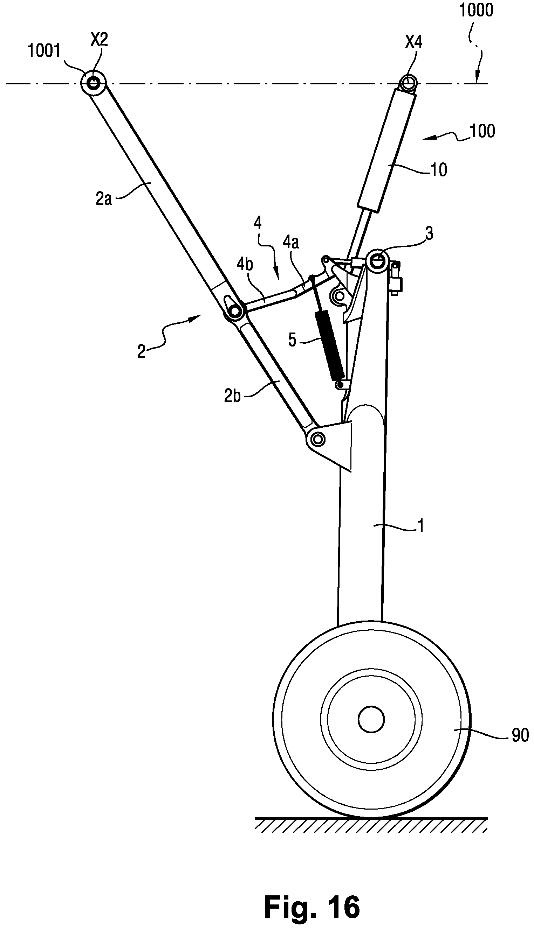

En référence aux figures 1 à 16, l'atterrisseur, généralement désigné 100, comporte de façon connue en soi une jambe 1 articulée à la structure d'un aéronef 1000 (représentée en trait pointillé) selon un axe d'articulation X1 (vu ici en bout) et dont l'extrémité distale porte une roue 90. La jambe 1 est mobile entre une position déployée, illustrée en figure 8, dans laquelle l'atterrisseur 100 est amené préalablement à un atterrissage, et une position rétractée qui est celle de l'atterrisseur en vol, visible à la figure 12. Une contrefiche briseuse 2 est articulée d'une part sur la jambe 1 et d'autre part sur la structure de l'aéronef 1000. La contrefiche briseuse 2 comprend deux bielles 2a, 2b, articulées entre elles au niveau d'un genou 3. La bielle 2a est par ailleurs articulée sur l'aéronef 1000 selon un axe d'articulation X2 en un premier point 1001, tandis que la bielle 2b est articulée sur la jambe 1. La contrefiche briseuse 2 est amenée en position sensiblement alignée au moyen d'un organe de stabilisation 4 comportant une première biellette 4a et une deuxième biellette 4b, également articulées entre elles. La première biellette 4a est articulée sur la jambe 1 selon un axe X3, et la deuxième biellette 4b est articulée sur la contrefiche 2 ici au niveau du genou 3. Les première et deuxième biellettes 4a, 4b sont maintenues en position sensiblement alignée par un ressort 5 rappelant les première et deuxième biellettes 4a, 4b vers une position de verrouillage illustrée en fi-gure 1 et dans lesquelles les première et deuxième biellettes 4a et 4b sont alignées. L'alignement des première et deuxième biellettes 4a, 4b est défini par la mise en contact d'une première butée 6a et d'une deuxième butée 6b respectivement montées sur la première biellette 4a et la deuxième biellette 4b.

Ainsi stabilisée, la contrefiche briseuse 2 s'oppose à toute rotation de la jambe 1 autour de son axe d'articulation X1, de sorte que la position déployée (figure 1) est une position stable. Comme cela est bien connu, les bielles 2a, 2b et les biellettes 4a, 4b sont conçues de sorte que pour arriver à la position verrouillée illustrée à la fi-gure 1, le genou d'articulation des bielles 2a, 2b et le genou d'articulation des première et deuxième biellettes 4a, 4b passent légèrement au-delà de l'alignement géométrique des bielles 2a, 2b et de l'alignement géométrique des biellettes 4a, 4b.

Un actionneur de manœuvre, ici un premier vérin 10 hydraulique de déploiement est articulé d'une part sur l'aéronef 1000 autour d'un axe d'articulation X4, et d'autre part sur la jambe 1 de l'atterrisseur autour d'un axe d'articulation X5. Le premier vérin 10 comprend une première chambre 11 pourvue d'un port 12 d'alimentation de déploiement et une deuxième chambre 13 pourvue d'un port 14 d'alimentation de rétraction. Le port 12 d'alimentation de déploiement est relié par un premier piquage à une première ligne d'alimentation hydraulique A1 et le port 14 d'alimentation de rétraction est relié à par un deuxième piquage une deuxième ligne d'alimentation hydraulique A2.

L'atterrisseur 100 comporte également un dispositif de verrouillage 20 comprenant un deuxième vérin 21 relié à un distributeur tournant 30. Le deuxième vérin 21 est articulé d'une part sur la jambe 1 et d'autre part sur un levier 22 solidaire de la première biellette 4a. Le deuxième vérin 21 comprend une troisième chambre 23 pourvue d'un port 24 d'alimentation de déploiement et une quatrième chambre 25 pourvue d'un port 26 d'alimentation de rétraction.

Le distributeur tournant 30 comprend un boisseau 31.1 cylindrique, fixe et solidaire d'une base 31, et reçu à rotation autour d'un axe de rotation X6 dans une chemise 32 tubulaire. La chemise 32 est rigidement reliée à la jambe 1 par une manivelle 33. La base 31 est reliée à la structure de l'aéronef 1000 par une oreille de fixation 34.

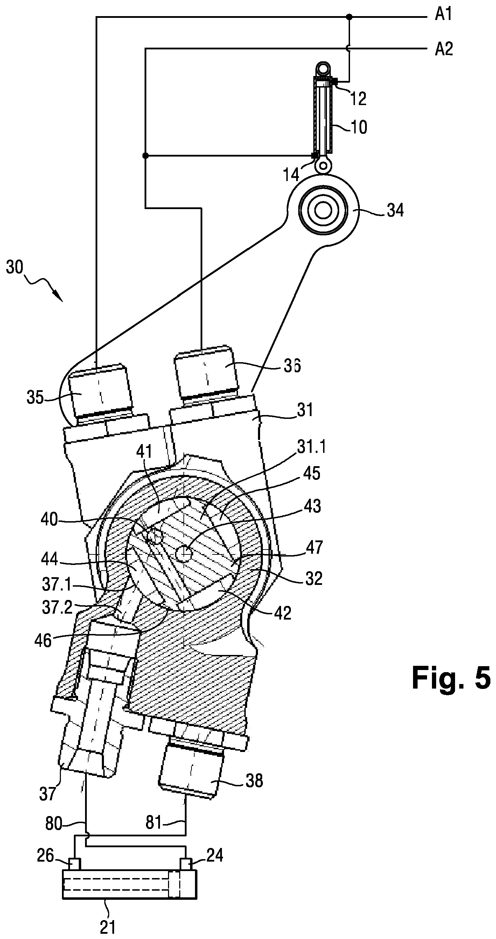

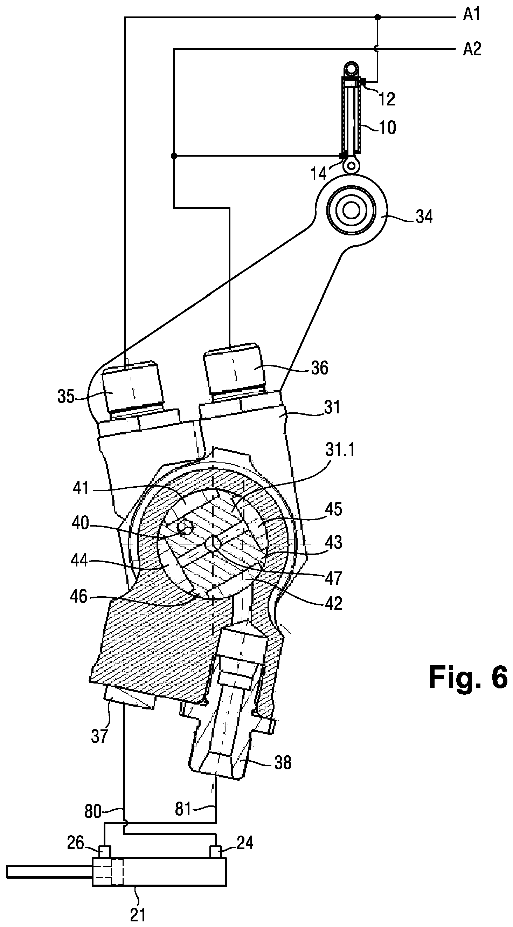

La base 31 comprend un premier port d'alimentation 35 et un deuxième port d'alimentation 36. La chemise 32 comprend un premier port de sortie 37 et un deuxième port de sortie 38. Ainsi la position du boisseau 31.1 dans la chemise 32 est-elle indexée sur la position de la jambe 1 de l'atterrisseur 100 relativement à la structure de l'aéronef 1000. Comme visible en figure 5 et 6, une première ligne A1 d'alimentation hydraulique est fluidiquement reliée au port 12 d'alimentation de déploiement et au premier port d'alimentation 35. Une deuxième ligne A2 d'alimentation hydraulique est fluidiquement reliée au port 14 d'alimentation de rétraction et au deuxième port d'alimentation 36. Le premier port de sortie 37 est fluidiquement relié au port 24 du deuxième vérin 21 par une première conduite de liaison hydraulique rigide 80 (ici en acier inoxydable) et le deuxième port de sortie 38 est fluidiquement relié au port 26 du deuxième vérin 21 par une deuxième conduite de liaison hydraulique rigide 81 (ici en acier inoxydable). Le boisseau 31.1 comprend un premier conduit d'alimentation 40 fluidiquement reliée au premier port d'alimentation 35 et qui alimente une première chambre 41 et une deuxième chambre 42. Le boisseau 31.1 comprend également un deuxième conduit d'alimentation 43 fluidiquement reliée au deuxième port d'alimentation 36 qui alimente une troisième chambre 44 et une quatrième chambre 45. La première chambre 41, la deuxième chambre 42, la troisième chambre 44 et la quatrième chambre 45 sont réalisées sous la forme de rainures qui s'étendent sur la périphérie du boisseau 31.1 parallèlement à l'axe de rotation du boisseau 31.1. La première chambre 41, la deuxième chambre 42, la troisième chambre 44 et la quatrième chambre 45 sont situées à quatre-vingt-dix degrés l'une de l'autre par rapport à l'axe X6 de rotation du boisseau 31.1. La deuxième chambre 42 est séparée de la troisième chambre 44 par une première portion de cylindre 46. La deuxième chambre 42 est séparée de la quatrième chambre 45 par une deuxième portion de cylindre 47.

Un troisième conduit de sortie 37.1 relie le premier port de sortie 37 et débouche dans la chemise 32 selon une première section 37.2.

Un quatrième conduit de sortie 38.1 relie le deuxième port de sortie 38 et débouche dans la chemise 32 selon une deuxième section 38.2.

La première chambre 41, la deuxième chambre 42, la troisième chambre 44 et la quatrième chambre 45 mettent en lien fluidique le premier port d'alimentation 35, le deuxième port d'alimentation 36, le premier port de sortie 37 et le deuxième port de sortie 38 selon plusieurs configurations en fonction de la position angulaire relative du boisseau 31.1 et de la chemise 32.

Ainsi, dans un premier état correspondant à une première position angulaire relative de la chemise 32 et du boisseau 31.1 retenue comme étant comprise entre zéro et quatre-vingt-neuf degrés de déviation (selon un sens de rotation de la jambe 1 correspondant au déploiement de l'atterrisseur depuis sa position rétractée vers sa position déployée), le premier port d'alimentation 35 alimente le deuxième port de sortie 38 (figure 6) via la deuxième chambre 42. De manière homologue, le deuxième port d'alimentation 36 alimente le premier port de sortie 37 (figure 5) via la quatrième chambre 45.

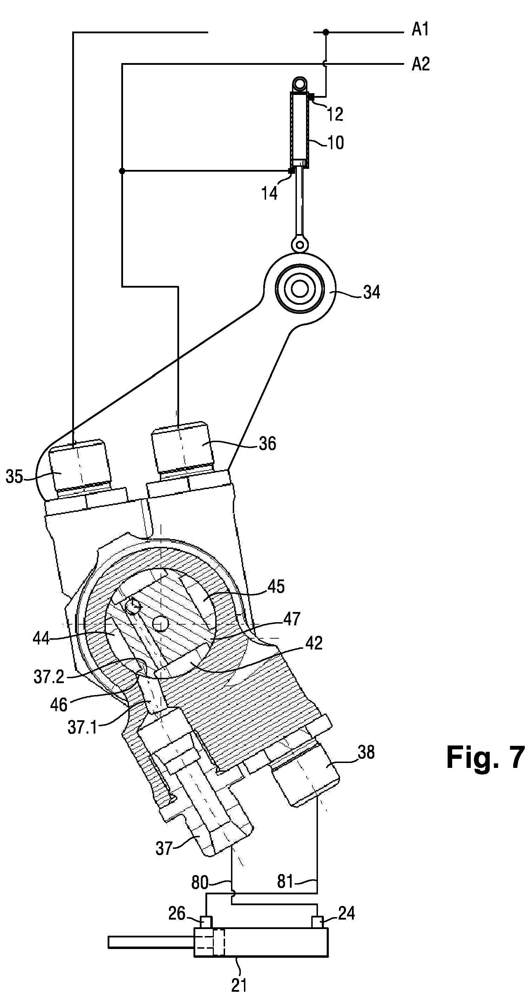

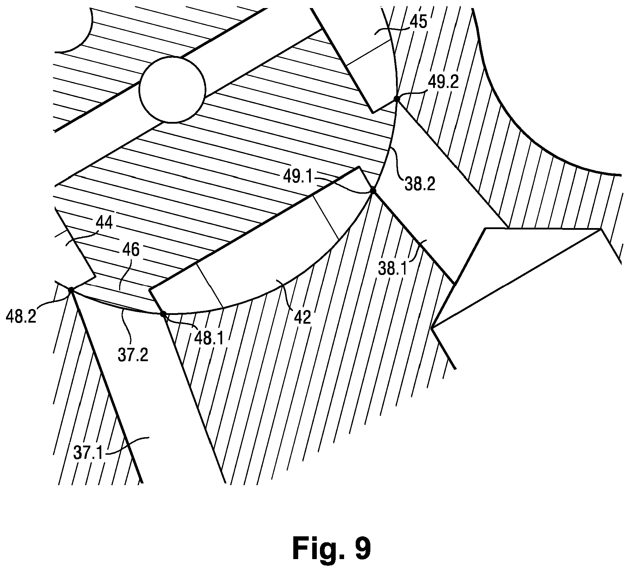

Dans un deuxième état représenté en figures 7 à 9, et qui correspond à une deuxième position angulaire relative de la chemise 32 et du boisseau 31.1 sensiblement égale à quatre-vingt-dix degrés de déviation, la première portion de cylindre 46 fait face au troisième conduit de sortie 37.1 et la deuxième portion de cylindre 47 fait face au quatrième conduit de sortie 38.1. Comme plus particulièrement visible en figure 9, l'aire de la surface extérieure de la première portion de cylindre 46 qui est en regard du troisième conduit 37.1 est inférieure à l'aire de la première section 37.2. Cette différence d'aire crée une première fuite 48.1 calibrée entre la deuxième chambre 42 et le premier port de sortie 37. Cette différence d'aire crée également une deuxième fuite 48.2 calibrée entre la troisième chambre 44 et le premier port de sortie 37. De manière similaire, une troisième fuite 49.1 calibrée est établie entre le quatrième conduit de sortie 38.1 et la deuxième chambre 42. Une quatrième fuite 49.2 calibrée est établie entre le quatrième conduit de sortie 38.1 et la quatrième chambre 45.

La première fuite 48.1 et la troisième fuite 49.1 agissent comme deux premières restrictions qui relient le premier port d'alimentation 35 au premier port de sortie 37 et au deuxième port de sortie 38.

La deuxième fuite 48.2 et la quatrième fuite 49.2 agissent comme deux deuxièmes restrictions qui relient le deuxième port d'alimentation 36 au premier port de sortie 37 et au deuxième port de sortie 38.

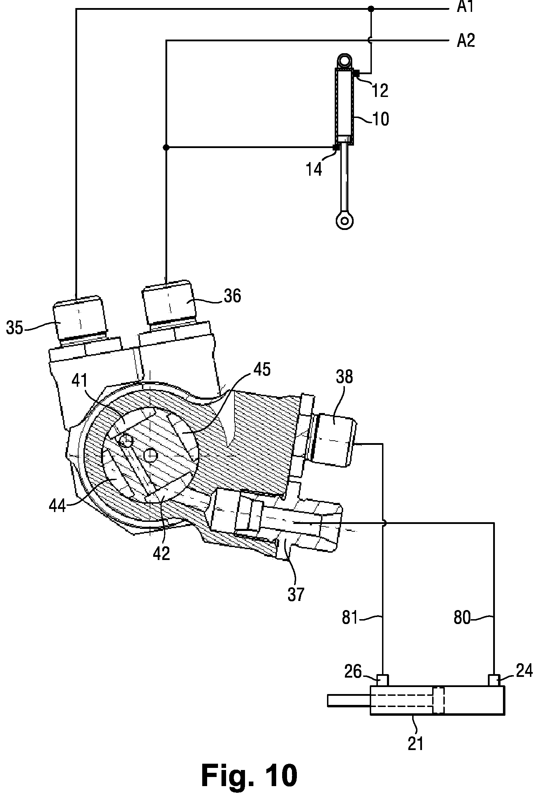

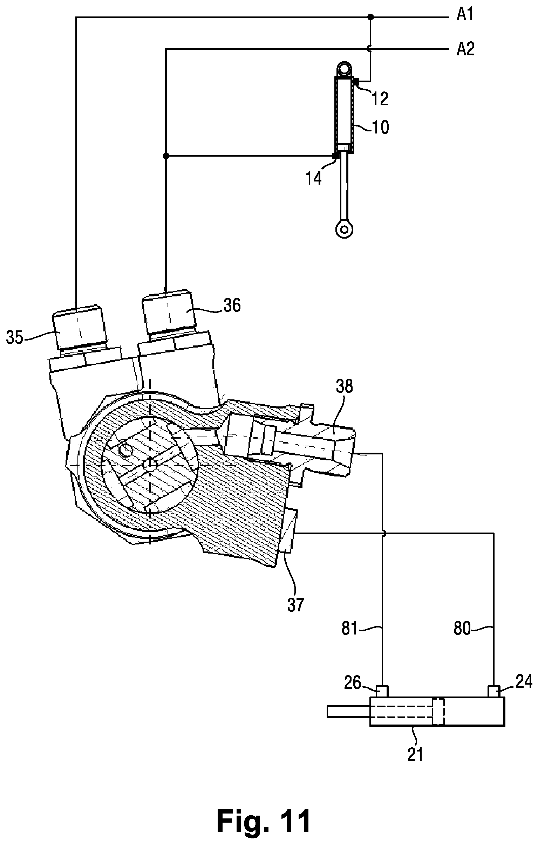

Dans un troisième état représenté en figures 10 et 11, et qui correspond à une troisième position angulaire relative du boisseau 31.1 dans la chemise 32 comprise entre quatre-vingt-dix et cent-quatre-vingt degrés de déviation, le premier port d'alimentation 35 alimente le premier port de sortie 37 (figure 10) via la deuxième chambre 42. De manière homologue, le deuxième port d'alimentation 36 alimente le deuxième port de sortie 38 (figure 11) via la quatrième chambre 45.

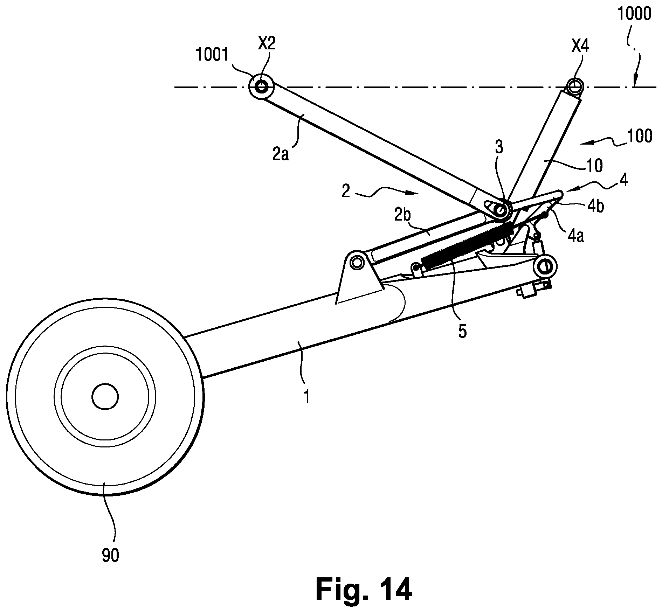

En fonctionnement, et partant de la position rétractée de l'atterrisseur 100 illustrée en figure 12, on provoque un déploiement du premier vérin 10 en commandant l'application d'une pression d'alimentation dans la première ligne d'alimentation A1 et la mise en communication de la ligne A2 avec un réservoir de fluide. Le distributeur 30 est dans son premier état représenté en figures 5 et 6, et la mise sous pression de la ligne d'alimentation A1 provoque une rétraction de la tige du deuxième vérin 21. Celui-ci exerce un effort sur la biellette 4a, ce qui a pour effets de faire pivoter celle-ci autour de son axe de rotation X3 et ainsi de briser l'alignement des biellettes 4a, 4b à l'encontre de l'action du ressort 5 (figure 13). Le dispositif de verrouillage est alors en position déverrouillée et l'atterrisseur 100, sous l'action du premier vérin 10, entame son déploiement. La rotation de la jambe 1 autour de l'axe X1 provoque une rotation relative du boisseau 31.1 et de la chemise 32 qui amène le distributeur 30 dans son deuxième état (figures 7 à 9 et 14). Dans ce deuxième état, le deuxième vérin 21 n'offre aucune résistance au mouvement de la jambe 1. On observe une rétraction de la tige du deuxième vérin 21 (figure 14) au cours du mouvement de déploiement de l'atterrisseur 100, qui n'est pas gênée grâce aux liaisons fluidiques du deuxième état du distributeur 30.

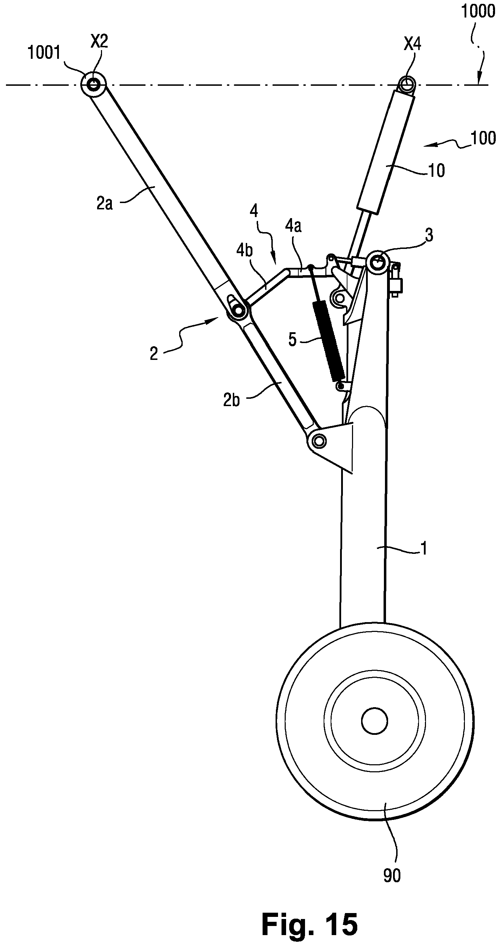

Une fois l'atterrisseur 100 à proximité de sa position totalement déployée (figure 15), le distributeur 30 passe dans son troisième état (figures 10, 11 et 16). Les liaisons fluidiques ainsi établies permettent le maintien du dispositif de verrouillage 20 en position verrouillée.

Lors du mouvement de rétraction de l'atterrisseur 100, le mouvement relatif du boisseau 31.1 dans la chemise 32 se fait dans le sens inverse et la séquence « rétraction du deuxième vérin 21 / deuxième vérin 21 libre de mouvement » est indexée sur le mouvement de l'atterrisseur 100.

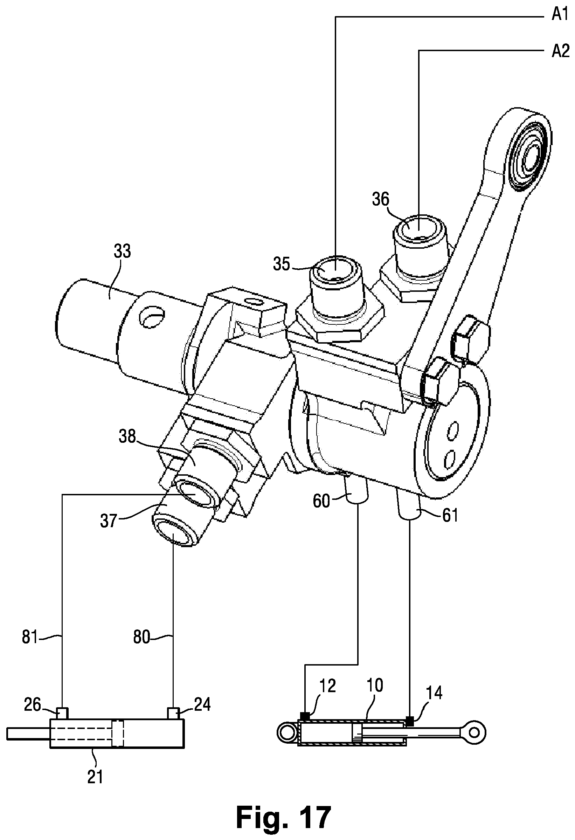

Selon un deuxième mode de réalisation représenté en figure 17, le distributeur 30 comprend un troisième port 60 de sortie et un quatrième port 61 de sortie. Le troisième port 60 est en lien fluidique constant avec le premier port d'alimentation 35 et le quatrième port 61 de sortie est en lien fluidique constant avec le deuxième port d'alimentation 36. Dans ce mode de réalisation, le troisième port 60 est relié au port 12 d'alimentation de déploiement du premier vérin 10 et le quatrième port 61 est relié au port 14 d'alimentation de rétraction du premier vérin 10.

L'invention n'est pas limitée à ce qui vient d'être décrit, mais englobe au contraire toute variante entrant dans le cadre défini par les revendications.

En particulier,
- bien qu'ici le dispositif de verrouillage comprenne un vérin hydraulique, l'invention s'applique également à d'autres types d'actionneurs hydrauliques comme par exemple un actionneur rotatif ;
- bien qu'ici le distributeur comprenne une chemise reliée rigidement à une jambe de l'atterrisseur et un boisseau solidaire d'un axe de rotation de la jambe sur l'aéronef, l'invention s'applique également à d'autres types de liaison fonctionnelle du distributeur à l'atterrisseur, comme par exemple un réducteur, un système bielle/manivelle, une liaison par courroie crantée et roue dentée ou tout autre moyen permettant d'indexer un mouvement du distributeur sur un mouvement de l'atterrisseur lors de son déploiement et sa rétraction. Le distributeur peut également être relié à un autre axe de l'atterrisseur comme par exemple l'axe reliant le premier vérin de déploiement à la jambe, l'axe reliant la contrefiche à la jambe, l'axe reliant l'une des biellettes à la jambe, l'axe reliant la contrefiche à l'aéronef, l'axe reliant le premier vérin de déploiement à l'aéronef ;
- bien qu'ici le boisseau comporte des rainures et des canaux forés, l'invention s'applique également à d'autres moyens de mettre sélectivement en relation des ports d'entrée et de sortie dans un distributeur tournant comme par exemple un canal central d'alimentation et des canaux périphériques ;
- bien qu'ici le distributeur tournant comprenne un troisième port de sortie et un quatrième port de sortie respectivement en lien fluidique constant avec le premier port d'alimentation et le deuxième port d'alimentation, l'invention s'applique également à un distributeur pourvu d'un seul port de sortie en lien fluidique constant avec un port d'entrée ;
- bien qu'ici le distributeur comprenne des chambres fixes en face desquelles les ports de sortie se déplacent, l'invention s'applique également à des ports fixes en face desquelles des chambres mobiles et reliées entre elles se déplacent, ces chambres pouvant être réalisées par exemple sous la forme de rainures périphériques dans un boisseau mobile ;
- bien qu'ici le distributeur soit relié d'une part à une structure de l'aéronef et d'autre part à une jambe de l'atterrisseur, l'invention s'applique également à un distributeur dépourvu de liaison à l'aéronef, comme par exemple une liaison d'une part à la jambe et d'autre part à un axe de rotation de la jambe, ou encore tout autre couple d'éléments ayant un mouvement relatif indexable sur le mouvement de l'atterrisseur ;
- bien qu'ici le passage entre le premier état et le deuxième état se fasse pour une position angulaire relative de la chemise et du boisseau égale à quatre-vingt-dix degrés, l'invention s'applique également à d'autres valeurs de position angulaire relative de la chemise et du boisseau pour le passage du premier état au deuxième état. Préférentiellement, la position angulaire relative de la chemise et du boisseau pour laquelle se fait le passage entre le premier et le deuxième état correspond à la position angulaire relative de la chemise et du boisseau lorsque l'atterrisseur est à la moitié de sa course d'extension/rétraction, une plage de plus ou moins dix pour cent autour de cette valeur est encore préférée ;
- bien qu'ici l'invention ait été décrite en lien à un actionneur de déverrouillage double effet piloté par un distributeur tournant comportant un premier port d'alimentation fluidiquement relié à la première alimentation hydraulique, un deuxième port d'alimentation fluidiquement relié à la deuxième alimentation hydraulique ainsi qu'un premier port de sortie et un deuxième port de sortie fluidiquement relié à l'actionneur hydraulique, l'invention s'applique également à un actionneur de déverrouillage simple effet couplé à un distributeur tournant comportant un unique premier port d'alimentation fluidiquement relié à la première alimentation hydraulique et un unique premier port de sortie fluidiquement relié à l'actionneur hydraulique.

## Revendications

1. Atterrisseur (100) destiné à être monté à rotation sur un aéronef (1000) et équipé d'un vérin hydraulique (10) de déploiement comprenant une première chambre (11) reliée à une première alimentation hydraulique (A1) et une deuxième chambre (13) reliée à une deuxième alimentation hydraulique (A2), l'atterrisseur (100) comprenant un dispositif de verrouillage (20) comprenant un actionneur hydraulique (21), **caractérisé en ce que** l'actionneur hydraulique est relié à un distributeur tournant (30) et **en ce que** le distributeur tournant (30) comporte :
- des moyens de la liaison fonctionnelle du distributeur tournant (30) à l'atterrisseur (100) agencé pour indexer mécaniquement un mouvement du distributeur sur un mouvement de l'atterrisseur lors de son déploiement et sa rétraction ;
- un premier port (35) d'alimentation fluidiquement relié à la première alimentation hydraulique (A1) ;
- un premier port de sortie (37) fluidiquement relié à l'actionneur hydraulique (21).

2. Atterrisseur (100) selon la revendication 1, dans lequel l'actionneur (21) est un vérin comportant une troisième chambre (23) reliée au premier port de sortie (37).

3. Atterrisseur (100) selon la revendication 2, dans lequel l'actionneur (21) comprend une quatrième chambre (25), le distributeur tournant (30) comprenant un deuxième port d'alimentation (36) fluidiquement relié à la deuxième alimentation hydraulique (A2) et un deuxième port de sortie (38) fluidiquement relié à la quatrième chambre (25).

4. Atterrisseur (100) selon la revendication 3, dans lequel le distributeur tournant (30) est agencé de manière à ce que :
- dans un premier état, le premier port d'alimentation (35) est relié au deuxième port de sortie (38) et le deuxième port d'alimentation (36) est relié au premier port de sortie (37) ;
- dans un deuxième état, le premier port d'alimentation (35) est relié par une première restriction (48.1, 49.1) au premier port de sortie (37) et au deuxième port de sortie (38), le deuxième port d'alimentation (36) est relié par une deuxième restriction (48.2, 49.2) au premier port de sortie (37) et au deuxième port de sortie (38) ;
- dans un troisième état, le premier port d'alimentation (35) est relié au premier port de sortie (37) et le deuxième port d'alimentation (36) est relié au deuxième port de sortie (38).

5. Atterrisseur (100) selon la revendication 3, dans lequel les moyens de la liaison fonctionnelle du distributeur tournant (30) à l'atterrisseur comprennent un accouplement (33) à une jambe de l'atterrisseur (100).

6. Atterrisseur (100) selon la revendication 3 dans lequel une première conduite de liaison (80) entre le premier port de sortie et l'actionneur hydraulique et une deuxième conduite de liaison (81) entre le deuxième port de sortie (38) et l'actionneur hydraulique (21) sont rigides.

7. Atterrisseur (100) selon l'une quelconque des revendications précédentes, dans lequel un bâti (32) de l'actionneur hydraulique (21) est solidaire d'une jambe (1) de l'atterrisseur (100) qui porte une roue (90).

8. Atterrisseur (100) selon l'une quelconque des revendications précédentes, dans lequel le dispositif de verrouillage (20) comprend une première biellette (4a) de verrouillage articulée sur une deuxième biellette (4b) de verrouillage, l'actionneur (21) étant relié à la première biellette (4a) ou la deuxième biellette (4b).

9. Aéronef (1000) comprenant un atterrisseur (100) selon l'une quelconque des revendications précédentes.

## Patentansprüche

1. Fahrwerk (100), das dazu bestimmt ist, drehbar an einem Luftfahrzeug (1000) angebracht zu werden, und das mit einem hydraulischen Ausfahrzylinder (10) ausgestattet ist, welcher eine mit einer ersten Hydraulikversorgung (A1) verbundene, erste Kammer (11) und eine mit einer zweiten Hydraulikversorgung (A2) verbundene, zweite Kammer (13) umfasst, wobei das Fahrwerk (100) eine Verriegelungsvorrichtung (20) mit einem hydraulischen Aktuator (21) umfasst, **dadurch gekennzeichnet, dass** der hydraulische Aktuator mit einem Drehverteiler (30) verbunden ist und dass der Drehverteiler (30) enthält:
- Verbindungsmittel zur funktionellen Verbindung des Drehverteilers (30) mit dem Fahrwerk (100), welche dafür ausgelegt sind, während des Aus- und Einfahrens eine Bewegung des Verteilers mechanisch auf eine Bewegung des Fahrwerks zu indexieren;
- einen ersten Versorgungsanschluss (35), der fluidisch mit der ersten Hydraulikversorgung (A1) verbunden ist;
- einen ersten Ausgangsanschluss (37), der fluidisch mit dem hydraulischen Aktuator (21) verbunden ist.

2. Fahrwerk (100) nach Anspruch 1, wobei es sich bei dem Aktuator (21) um einen Zylinder handelt, der eine mit dem ersten Ausgangsanschluss (37) verbundene, dritte Kammer (23) enthält.

3. Fahrwerk (100) nach Anspruch 2, wobei der Aktuator (21) eine vierte Kammer (25) umfasst, wobei der Drehverteiler (30) einen fluidisch mit der zweiten Hydraulikversorgung (A2) verbundenen, zweiten Versorgungsanschluss (36) und einen mit der vierten Kammer (25) verbundenen, zweiten Ausgangsanschluss (38) umfasst.

4. Fahrwerk (100) nach Anspruch 3, wobei der Drehverteiler (30) derart ausgelegt ist, dass:
- in einem ersten Zustand der erste Versorgungsanschluss (35) mit dem zweiten Ausgangsanschluss (38) verbunden ist und der zweite Versorgungsanschluss (36) mit dem ersten Ausgangsanschluss (37) verbunden ist;
- in einem zweiten Zustand der erste Versorgungsanschluss (35) durch eine erste Beschränkung (48.1, 49.1) mit dem ersten Ausgangsanschluss (37) und mit dem zweiten Ausgangsanschluss (38) verbunden ist, der zweite Versorgungsanschluss (36) durch eine zweite Beschränkung (48.2, 49.2) mit dem ersten Ausgangsanschluss (37) und mit dem zweiten Ausgangsanschluss (38) verbunden ist;
- in einem dritten Zustand der erste Versorgungsanschluss (35) mit dem ersten Ausgangsanschluss (37) verbunden ist und der zweite Versorgungsanschluss (36) mit dem zweiten Ausgangsanschluss (38) verbunden ist.

5. Fahrwerk (100) nach Anspruch 3, wobei die Verbindungsmittel zur funktionellen Verbindung des Drehverteilers (30) mit dem Fahrwerk eine Kupplung (33) zum Ankoppeln an das Bein des Fahrwerks (100) umfassen.

6. Fahrwerk (100) nach Anspruch 3, wobei eine erste Verbindungsleitung (80) zwischen dem ersten Ausgangsanschluss und dem hydraulischen Aktuator, und eine zweite Verbindungsleitung (81) zwischen dem zweiten Ausgangsanschluss (38) und dem hydraulischen Aktuator (21) starr ausgebildet sind.

7. Fahrwerk (100) nach einem der vorhergehenden Ansprüche, wobei ein Gehäuse (32) des hydraulischen Aktuators (21) fest mit einem Bein (1) des Fahrwerks (100) verbunden ist, welches ein Rad (90) trägt

8. Fahrwerk (100) nach einem der vorhergehenden Ansprüche, wobei die Verriegelungsvorrichtung (20) einen ersten Verriegelungsschenkel (4a) umfasst, der an einem zweiten Verriegelungsschenkel (4b) angelenkt ist, wobei der Aktuator (21) mit dem ersten Schenkel (4a) oder mit dem zweiten Schenkel (4b) verbunden ist.

9. Luftfahrzeug (1000), umfassend ein Fahrwerk (100) nach einem der vorhergehenden Ansprüche.

## Claims

1. Landing gear (100) intended to be mounted in rotation on an aircraft (1000) equipped with a deployment hydraulic jack (10) comprising a first chamber (11) connected to a first hydraulic supply (A1) and a second chamber (13) connected to a second hydraulic supply (A2), the landing gear comprising a locking device (20) comprising a hydraulic actuator (21), **characterized in that** the hydraulic actuator is connected to a rotary distributor (30), and **in that** the rotary distributor (30) comprising:
means for operationally connecting the rotary distributor (30) to the landing gear (100), said means being arranged to mechanically index a movement of the rotary distributor on a movement of the landing gear when it is deployed and retracted;
a first supply port (35) fluidly connected to the first hydraulic supply (A1);
a first outlet port (37) fluidly connected to the hydraulic actuator (21).

2. Landing gear (100) according to claim 1, wherein the actuator (21) is a jack comprising a third chamber (23) connected to the first outlet port (37).

3. Landing gear (100) according to claim 2, wherein the actuator (21) comprises a fourth chamber (25), the rotary distributor (30) comprising a second supply port (36) fluidly connected to the second hydraulic supply (A2) and a second outlet port (38) fluidly connected to the fourth chamber (25).

4. Landing gear (100) according to claim 3, wherein the rotary distributor (30) is arranged such that:
in a first state, the first supply port (35) is connected to the second outlet port (38) and the second supply port (36) is connected to the first outlet port (37);
in a second state, the first supply port (35) is connected by a first restrictor (48.1, 49.1) to the first outlet port (37) and to the second outlet port (38), the second supply port (36) is connected by a second restrictor (48.2, 49.2) to the first outlet port (37) and to the second outlet port (38);
in a third state, the first supply port (35) is connected to the first outlet port (37) and the second supply port (36) is connected to the second outlet port (38).

5. Landing gear (100) according to claim 3, wherein the means for operationally connecting the rotary distributor (30) to the landing gear comprise a coupling (33) to a strut of the landing gear (100).

6. Landing gear (100) according to claim 3, wherein a first connecting pipe (80) between the first outlet port and the hydraulic actuator and a second connecting pipe (81) between the second outlet port (38) and thehydraulic actuator (21) are rigid.

7. Landing gear (100) according to any one of the preceding claims, wherein a frame (32) of the hydraulic actuator (21) is secured to a strut (1) of the landinggear (100) which carries a wheel (90).

8. Landing gear (100) according to any one of the preceding claims, wherein the locking device (20) comprises a first locking link (4a) articulated on a second locking link (4b), the actuator (21) being connected to the first link (4a) or the second link (4b).

9. Aircraft (1000) comprising a landing gear (100)according to any one of the preceding claims.
